# EUROPEAN PATENT APPLICATION

(11) **EP 4 571 506 A1**
(43) Date of publication of application: **18.06.2025**
(21) Application number: 23861939.9
(22) Date of filing: 08.06.2023
(51) Int. Cl.: G06F 9/455

(54) **RESOURCE SCHEDULING METHOD AND RELATED DEVICE**

(30) Priority: 05.09.2022 CN 202211080778
(71) Applicant: Huawei Cloud Computing Technologies Co., Ltd., Guiyang, Guizhou 550025 (CN)
(72) Inventor: LI, Wenchao, Shenzhen, Guangdong 518129 (CN); LV, Weihua, Shenzhen, Guangdong 518129 (CN); LI, Chengjin, Shenzhen, Guangdong 518129 (CN)
(74) Representative: Goddar, Heinz J.
(86) International application number: PCT/CN2023/099201
(87) International publication number: WO 2024/051236

(57) **Abstract**

Embodiments of this application provide a resource scheduling method and a related device, and relate to the field of communication technologies. The method includes: building, by obtaining resource information of each node in a cluster and resource information of a container in each node, a resource profile of a microservice deployed on each node, where a container engine is installed on each node; and when determining that a first microservice deployed in the cluster is a microservice on which resource adjustment needs to be performed, generating, based on a resource profile of the first microservice, resource information of a first node on which the first microservice is deployed, and resource information of a container in the first node, a resource adjustment instruction associated with the first microservice, and adjusting, based on the container engine and the resource adjustment instruction, a resource of a pod associated with the first microservice. In this application, pod resource adjustment is performed based on a profile of a microservice and a container engine, and the resource adjustment is sensitive and accurate and has quick response.

## Description

This application claims priority to Chinese Patent Application No. 202211080778.9, filed with the China National Intellectual Property Administration on September 5, 2022 and entitled "RESOURCE SCHEDULING METHOD AND RELATED DEVICE", which is incorporated herein by reference in its entirety.

### TECHNICAL FIELD

This application relates to the field of communication technologies, and in particular, to a resource scheduling method and a related device.

### BACKGROUND

With development of virtualization technologies, more companies migrate their online applications to cloud platforms. As a lightweight virtualization technology, the container (Container) technology has developed rapidly in recent years. The container technology creates independent running environments for different application programs, and implements resource isolation, configuration, and security assurance. Therefore, the container technology can meet on-demand resource allocation requirements of the applications, and ensure isolation and availability of the applications.

To meet the requirements of the applications, in practice, many containers usually need to be deployed in a computing device cluster (Cluster, cluster for short below) for unified management and providing services externally. Currently, Kubernetes (K8s) is a typical tool for container cluster management system. K8s can build container deployment services. A container set (pod) is a basic deployment unit in K8s. A pod includes a group of containers working on a same node.

K8s mainly implements automatic scaling using a horizontal pod autoscaler (Horizontal Pod Autoscaler, HPA) and a vertical pod autoscaler (Vertical Pod Autoscaler, VPA). However, such a manner of using HPA or VPA for pod scaling has problems of a low response speed and insufficiency in meeting scaling requirements in a scenario with a short-duration traffic burst.

### SUMMARY

In view of this, it is necessary to provide a resource scheduling method, to resolve a prior-art problem of a low response speed for pod scaling.

A first aspect of embodiments of this application discloses a resource scheduling method. The method includes: obtaining resource information of each node in a cluster and resource information of a container in each node, where a container engine is installed on each node; building, based on the resource information of each node and the resource information of the container in each node, a resource profile of a microservice deployed on each node, where the microservice deployed on each node runs based on one or more containers; if determining that resource adjustment needs to be performed on a first microservice deployed in the cluster, generating, based on a resource profile of the first microservice, resource information of a first node on which the first microservice is deployed, and resource information of a container in the first node, a resource adjustment instruction associated with the first microservice; and adjusting, based on the container engine and the resource adjustment instruction, a resource of a pod associated with the first microservice.

In the foregoing technical solution, the resource information of each node in the cluster is obtained, the resource profile of the microservice deployed on each node is built, and resource adjustment is performed based on a resource profile of a microservice, resource information of a node, and resource information of a container, so that a resource of the node can be fully utilized. In this way, the resource adjustment of the microservice is more targeted, and comprehensive resource utilization of the node and/or the cluster can be improved. Compared with resource adjustment performed using an HPA/VPA, resource adjustment performed based on a container engine has a lower delay without affecting an existing scheduling capability of the cluster, resource adjustment can be implemented within seconds, a capability of the microservice deployed in the cluster to handle a traffic burst can be enhanced, and stability and a network throughput of the cluster can be improved. During the resource adjustment performed on the microservice, the resource adjustment may be performed for all pods associated with the microservice, or may be performed for one or several specific pods in the microservice, so that a resource adjustment is performed at a smaller granularity and more accurate.

In some embodiments, the building, based on the resource information of each node and the resource information of the container in each node, a resource profile of a microservice deployed on each node includes: obtaining, based on the resource information of the container in each node, resource information of the microservice deployed on each node; and building, based on the resource information of each node and the resource information of the microservice deployed on each node, the resource profile of the microservice deployed on each node, where the resource profile includes a resource occupation dimension and a time dimension.

In the foregoing technical solution, the resource profile of the microservice deployed on each node is built based on the resource information of each node and the resource information of the microservice deployed on each node. In the resource profile, the time dimension and the resource occupation dimension are used to represent features of resources occupied by the microservice at different time. Therefore, when the resource adjustment is performed on the microservice, resource allocation may be performed based on the resource profile of the microservice, so that the resource adjustment of the microservice is more targeted, resource utilization of the node can be improved, and a service level agreement requirement of the microservice can be met to the maximum extent.

In some embodiments, the resource scheduling method further includes: if a difference between a resource occupied by the first microservice and a resource upper limit value of the first microservice is less than a first preset threshold, determining that resource adjustment needs to be performed on the first microservice; or if a difference between a resource occupied by the first microservice and a resource upper limit value of the first microservice is greater than a second preset threshold, determining that resource adjustment needs to be performed on the first microservice.

In the foregoing technical solution, a microservice with insufficient resources or a microservice with excessive resources may be determined as a microservice on which resource adjustment needs to be performed. For example, if a difference between a resource occupied by a microservice and a resource upper limit value of the microservice is less than the first preset threshold, it indicates that the microservice has insufficient resources, and scale-out is triggered for the microservice to meet a resource requirement required for running the microservice. If a difference between a resource occupied by a microservice and a resource upper limit value of the microservice is greater than the second preset threshold, it indicates that the microservice has excessive resources, and scale-in is triggered for the microservice to allocate an excess resource to another microservice with insufficient resources, to improve resource utilization of a node.

In some embodiments, the resource occupied by the first microservice includes one or more of the following: a processor resource, a memory resource, a disk resource, or a network bandwidth resource, and the determining that resource adjustment needs to be performed on the first microservice includes: if a difference between a corresponding resource upper limit value and any one of the processor resource, the memory resource, the disk resource, and the network bandwidth resource occupied by the first microservice is less than a corresponding first preset threshold, determining that resource adjustment needs to be performed on the first microservice; or if a difference between a corresponding resource upper limit value and any one of the processor resource, the memory resource, the disk resource, and the network bandwidth resource occupied by the first microservice is greater than a corresponding second preset threshold, determining that resource adjustment needs to be performed on the first microservice.

In the foregoing technical solution, a microservice that has insufficient processor resources, memory resources, disk resources, or network bandwidth resources, or a microservice that has excessive processor resources, memory resources, disk resources, or network bandwidth resources may be determined as a microservice on which resource adjustment needs to be performed, to meet a resource requirement required for running the microservice, and improve resource utilization of a node.

In some embodiments, the determining that resource adjustment needs to be performed on a first microservice includes: if the difference between the corresponding resource upper limit value and any one of the processor resource, the memory resource, the disk resource, and the network bandwidth resource occupied by the first microservice is less than the corresponding first preset threshold, determining that scale-out adjustment needs to be performed on the first microservice; or if the difference between the corresponding resource upper limit value and any one of the processor resource, the memory resource, the disk resource, and the network bandwidth resource occupied by the first microservice is greater than the corresponding second preset threshold, determining that scale-in adjustment needs to be performed on the first microservice.

In the foregoing technical solution, if a difference between a corresponding resource upper limit value and any one of a processor resource, a memory resource, a disk resource, and a network bandwidth resource occupied by a microservice is less than a corresponding first preset threshold, it indicates that a specific type of resource of the microservice is insufficient, and it is determined that this type of resource of the microservice needs to be scaled out, to meet a resource requirement required for running the microservice; and if a difference between a corresponding resource upper limit value and any one of a processor resource, a memory resource, a disk resource, and a network bandwidth resource occupied by a microservice is greater than a corresponding second preset threshold, it indicates that a specific type of resource of the microservice is in excess, and it is determined that this type of resource of the microservice needs to be scaled in, so that an excess resource can be allocated to another microservice with insufficient resources, to improve resource utilization of a node.

In some embodiments, the generating, based on a resource profile of the first microservice, resource information of a node on which the first microservice is deployed, and resource information of a container in the node, a resource adjustment instruction associated with the first microservice includes: predicting, based on the resource profile of the first microservice, a quantity of resources required by the first microservice; and generating, based on the predicted quantity of resources, the resource information of the node on which the first microservice is deployed, and the resource information of the container in the node, the resource adjustment instruction associated with the first microservice.

In the foregoing technical solution, a quantity of resources required by a microservice is predicted based on a resource profile of the microservice, and then a resource is allocated to the microservice based on the predicted quantity of resources, resource information of a node on which the microservice is deployed, and resource information of a container in the node, so that resource adjustment of the microservice is more accurate, excessive resource allocation or insufficient resource allocation is avoided, and resource utilization of the node is improved.

In some embodiments, the generating the resource adjustment instruction associated with the first microservice includes: generating a resource adjustment instruction for all pods associated with the first microservice; or generating a resource adjustment instruction for a specified pod associated with the first microservice.

In the foregoing technical solution, when the resource adjustment instruction associated with the first microservice is generated, the resource adjustment may be performed on all the pods associated with the microservice, or may be performed on one or several specific pods in the microservice, provided that an adjusted pod can enable the microservice to have sufficient resources to handle a current service volume/traffic increase problem.

In some embodiments, the adjusting, based on the container engine and the resource adjustment instruction, a resource of a pod associated with the first microservice includes: determining a pod associated with the resource adjustment instruction, and invoking, using the container engine, a resource adjustment application programming interface to perform resource adjustment on the pod associated with the resource adjustment instruction.

In the foregoing technical solution, when resource adjustment is performed on a microservice, whether a resource adjustment instruction instructs to perform resource adjustment on all pods associated with the microservice or to perform resource adjustment on one or several pods in the microservice is first determined, and a resource adjustment application programming interface is invoked using a container engine to perform resource adjustment on the specified pod, so that the resource adjustment has a low delay, resource adjustment can be implemented within seconds, and a capability of the microservice deployed in the cluster to handle a traffic burst is enhanced.

In some embodiments, a priority is configured for the microservice deployed on each node, and the resource scheduling method further includes: if a remaining resource of the first node cannot meet a resource adjustment requirement of the first microservice, releasing a part of resources occupied by a second microservice deployed on the first node, where a priority of the second microservice is lower than a priority of the first microservice.

In the foregoing technical solution, different priorities may be configured for microservices in a preset manner. If a node has insufficient resources and a resource adjustment requirement of a microservice deployed on the node cannot be met, a resource of a specific microservice that is deployed on the node and whose priority is lower than that of the microservice may be released, so that the node has sufficient idle resources to be allocated to the microservice on which resource adjustment needs to be performed.

In some embodiments, the releasing a part of resources occupied by a second microservice deployed on the first node includes: releasing, based on a resource profile of the second microservice, the part of resources occupied by the second microservice.

In the foregoing technical solution, when a node has insufficient resources and a resource adjustment requirement of a microservice deployed on the node cannot be met, a part of resources occupied by a microservice with a low priority may be released based on a resource profile of the lower-priority microservice. For example, a quantity of resources that are of the lower-priority microservice and that can be released without affecting running of the lower-priority microservice may be determined based on the resource profile of the lower-priority microservice.

In some embodiments, a priority is configured for the microservice deployed on each node, and the resource scheduling method further includes: if a remaining resource of the first node cannot meet a resource adjustment requirement of the first microservice, scheduling a second microservice deployed on the first node to another node in the cluster, where a priority of the second microservice is lower than a priority of the first microservice.

In the foregoing technical solution, different priorities may be configured for microservices in a preset manner. When a node has insufficient resources and a resource adjustment requirement of a microservice deployed on the node cannot be met, if a resource cannot be released from a microservice with a low priority, or a policy of releasing a resource from a microservice with a low priority is not used, a specific microservice that is deployed on the node and whose priority is lower than that of the microservice may be migrated to another node, so that the node has sufficient idle resources to be allocated to the microservice on which resource adjustment needs to be performed.

In some embodiments, the scheduling a second microservice deployed on the first node to another node in the cluster includes: selecting, based on resource profiles of microservices deployed on the first node, the second microservice that can be scheduled to the another node in the cluster.

In the foregoing technical solution, if a resource cannot be released from a microservice with a low priority, or a policy of releasing a resource from a microservice with a low priority is not used, a policy of migrating a specific microservice with a low priority to another node may be used, to schedule a lower-priority microservice that is currently inactive to another node based on resource profiles of microservices, so that a higher-priority microservice can be allocated with more resources. For example, if a current moment is a moment at night, a lower-priority microservice that is only active during the day but in a sleep state at night may be selected and scheduled to another node, so that more resources can be released for a higher-priority microservice without affecting running of the lower-priority microservice.

A second aspect of embodiments of this application discloses a resource scheduling method. The method includes: obtaining resource information of each node in a cluster and resource information of a container in each node, where a container engine is installed on each node; in response to a startup instruction of a first microservice deployed in the cluster, creating a first pod for the first microservice, where a first resource upper limit value is set for the first pod; generating, based on resource information of a first node on which the first microservice is deployed and resource information of a container in the first node, a resource adjustment instruction associated with the first pod; and adjusting a resource occupation upper limit of the first pod from the first resource upper limit value to a second resource upper limit value based on the container engine and the resource adjustment instruction, where the second resource upper limit value is greater than the first resource upper limit value.

In the foregoing technical solution, in a startup process of a microservice, a resource occupation upper limit allocated by a system to the microservice is increased based on resource information of a node of the microservice deployed in the cluster and resource information of a container in the node, to quickly start the microservice and shorten startup time of the microservice. Compared with resource adjustment performed using an HPA/VPA, resource adjustment performed based on a container engine has a lower delay without affecting an existing scheduling capability of the cluster, resource adjustment can be implemented within seconds, and a resource requirement for microservice startup has a quick response.

In some embodiments, the resource scheduling method further includes: if determining that the first microservice is successfully started, adjusting the resource occupation upper limit of the first pod from the second resource upper limit value to the first resource upper limit value.

In the foregoing technical solution, after a microservice is started, a resource that is additionally allocated to the microservice previously to shorten startup time of the microservice is reclaimed, to avoid resource excess in the microservice, and improve resource utilization of a node.

According to a third aspect, an embodiment of this application provides a resource scheduling apparatus. The apparatus includes: a first obtaining module, configured to obtain resource information of each node in a cluster and resource information of a container in each node, where a container engine is installed on each node; a building module, configured to build, based on the resource information of each node and the resource information of the container in each node, a resource profile of a microservice deployed on each node, where the microservice deployed on each node runs based on one or more containers; a first generation module, configured to: when resource adjustment needs to be performed on a first microservice deployed in the cluster, generate, based on a resource profile of the first microservice, resource information of a first node on which the first microservice is deployed, and resource information of a container in the first node, a resource adjustment instruction associated with the first microservice; and a first adjustment module, configured to adjust, based on the container engine and the resource adjustment instruction, a resource of a pod associated with the first microservice.

In the foregoing technical solution, the resource information of each node in the cluster is obtained, the resource profile of the microservice deployed on each node is built, and resource adjustment is performed based on a resource profile of a microservice, resource information of a node, and resource information of a container, so that a resource of the node can be fully utilized. In this way, the resource adjustment of the microservice is more targeted, and comprehensive resource utilization of the node and/or the cluster can be improved. Compared with resource adjustment performed using an HPA/VPA, resource adjustment performed based on a container engine has a lower delay without affecting an existing scheduling capability of the cluster, resource adjustment can be implemented within seconds, a capability of the microservice deployed in the cluster to handle a traffic burst can be enhanced, and stability and a network throughput of the cluster can be improved. During the resource adjustment performed on the microservice, the resource adjustment may be performed for all pods associated with the microservice, or may be performed for one or several specific pods in the microservice, so that resource adjustment is performed at a smaller granularity and more accurate.

According to a fourth aspect, an embodiment of this application provides a resource scheduling apparatus. The apparatus includes: a second obtaining module, configured to obtain resource information of each node in a cluster and resource information of a container in each node, where a container engine is installed on each node; a creation module, configured to: in response to a startup instruction of a first microservice deployed in the cluster, create a first pod for the first microservice, where a first resource upper limit value is set for the first pod; a second generation module, configured to generate, based on resource information of a first node on which the first microservice is deployed and resource information of a container in the first node, a resource adjustment instruction associated with the first pod; and a second adjustment module, configured to adjust a resource occupation upper limit of the first pod from the first resource upper limit value to a second resource upper limit value based on the container engine and the resource adjustment instruction, where the second resource upper limit value is greater than the first resource upper limit value.

In the foregoing technical solution, in a startup process of a microservice, a resource occupation upper limit allocated by a system to the microservice is increased based on resource information of a node of the microservice deployed in the cluster and resource information of a container in the node, to quickly start the microservice and shorten startup time of the microservice. Compared with resource adjustment performed using an HPA/VPA, resource adjustment performed based on a container engine has a lower delay without affecting an existing scheduling capability of the cluster, resource adjustment can be implemented within seconds, and a resource requirement for microservice startup has a quick response.

According to a fifth aspect, an embodiment of this application provides a computer-readable storage medium, including computer program instructions. When the computer program instructions are executed by a computing device cluster, the computing device cluster is enabled to perform the resource scheduling method according to the first aspect or the second aspect.

According to a sixth aspect, an embodiment of this application provides a computing device cluster, including at least one computing device. Each computing device includes a processor and a memory. A processor of the at least one computing device is configured to execute instructions stored in a memory of the at least one computing device, to enable the computing device cluster to perform the resource scheduling method according to the first aspect or the second aspect.

According to a seventh aspect, an embodiment of this application provides a computer program product. When the computer program product is run by a computing device cluster, the computing device cluster is enabled to perform the resource scheduling method according to the first aspect or the second aspect.

According to an eighth aspect, an apparatus is provided. The apparatus has a function of implementing behavior of the computing device cluster in the method according to the first aspect. The function may be implemented by hardware, or may be implemented by hardware by executing corresponding software. The hardware or software includes one or more modules corresponding to the foregoing function.

It may be understood that the computer-readable storage medium according to the fifth aspect, the computing device cluster according to the sixth aspect, the computer program product according to the seventh aspect, and the apparatus according to the eighth aspect may correspond to the method according to the first aspect and/or the method according to the second aspect. Therefore, for beneficial effect that can be achieved by the computer-readable storage medium, the computing device cluster, the computer program product, and the apparatus, refer to the beneficial effect in the corresponding method provided above. Details are not described herein again.

### BRIEF DESCRIPTION OF DRAWINGS

FIG. 1 is a diagram of an architecture of a cloud computing system according to an embodiment of this application;
FIG. 2 is a diagram of a structure of a computing device according to an embodiment of this application;
FIG. 3 is a diagram of a structure of a computing device cluster according to an embodiment of this application;
FIG. 4 is a diagram of an architecture of a resource scheduling system according to an embodiment of this application;
FIG. 5 is a diagram of an interaction procedure in which a resource scheduling system performs resource scheduling in a microservice traffic change scenario according to an embodiment of this application;
FIG. 6 is a diagram of an interaction procedure in which a resource scheduling system performs resource scheduling in a microservice startup scenario according to an embodiment of this application;
FIG. 7 is a diagram of a resource change of a microservice in a startup phase according to an embodiment of this application;
FIG. 8 is a schematic flowchart of a resource scheduling method according to an embodiment of this application;
FIG. 9 is a schematic flowchart of a resource scheduling method according to another embodiment of this application;
FIG. 10 is a diagram of functional modules of a first resource scheduling apparatus according to an embodiment of this application; and
FIG. 11 is a diagram of functional modules of a second resource scheduling apparatus according to another embodiment of this application.

### DESCRIPTION OF EMBODIMENTS

It should be noted that, in this application, "at least one" means one or more, and "a plurality of" means two or more. The term "and/or" describes an association relationship between associated objects and represents that three relationships may exist. For example, A and/or B may represent the following three cases: Only A exists, both A and B exist, and only B exists, where A and B may be singular or plural. In the specification, claims, and accompanying drawings of this application, the terms "first", "second", "third", "fourth", and the like (if existent) are intended to distinguish between similar objects but do not necessarily indicate a specific order or sequence.

In embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a relative concept in a specific manner.

K8s is an open-source container cluster management system developed by Google. K8s can be used to build a container scheduling service, allowing users to manage cloud container clusters using a K8s cluster without complex setup. A system automatically selects an appropriate worker node to perform specific container cluster scheduling. A core concept of K8s is a container pod (container pod). A container set (pod) includes a group of containers that work on a same worker node. The pod is a basic deployment unit of K8s. One pod can encapsulate one or more containers (container), storage resources (volume), an independent network IP address, and a policy option for managing and controlling a running mode of the container. Logically, the pod can be used to identify an instance of a specific application. For a pod encapsulating a plurality of containers, the plurality of containers usually include a main container and several auxiliary containers (SideCar container). For example, a web application includes three components: a frontend, a backend, and a database, and the three components run in respective containers, where the frontend of the web application is the main container. For this instance, a pod includes three containers.

Technical solutions in embodiments of this application may be applied to various cloud-based communication systems, for example, a long term evolution (long term evolution, LTE) system, a worldwide interoperability for microwave access (worldwide interoperability for microwave access, WiMAX) communication system, a future 5th generation (5th Generation, 5G) system, for example, a new radio wireless access technology (new radio access technology, NR), and a future communication system.

For ease of understanding of embodiments of this application, an application scenario of this application is described below. A service scenario described in embodiments of this application is intended to describe the technical solutions of embodiments of this application more clearly, and does not constitute any limitation on the technical solutions provided in embodiments of this application. It can be learned by a person of ordinary skill in the art that, with emergence of new service scenarios, the technical solutions provided in embodiments of this application are also applicable to a similar technical problem.

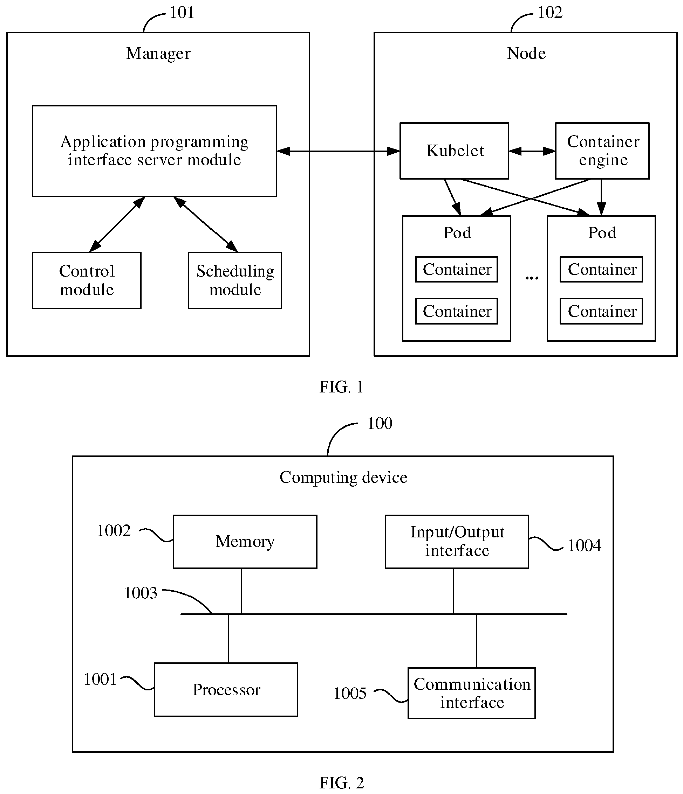

FIG. 1 is a diagram of an architecture of a cloud computing system according to an embodiment of this application.

This embodiment includes a manager (master) 101 and a node (node) 102. The node 102 may be a virtual computing device, or may be a physical computing device. Several pods may be deployed on one node 102. The manager 101 is a central management module of a container cluster management system, and the manager 101 may be considered as a group of processes that perform life cycle management for containers. For example, the manager 101 is a K8s master, and the manager 101 may include a control module (controller), a scheduling module (scheduler), an application programming interface server (application programming interface server, API server) module, and the like. These processes implement management functions such as resource management, pod deployment, and system establishment for an entire computing device cluster. The API server module provides a unique operation entry for resource objects, that is, is an interface module that provides functions for a user. All other components operate resource data through an API interface provided by the API server module and implement related network element functions by listening to related resource data. The control module is responsible for unified management and control of various container models, for example, performing CRUD (create Create, read Read, update Update, and delete Delete) operations on the container model. The container model may indicate, for example, one or more of the following information: a quantity of containers included in a pod, a type of an application program running in the container, a maximum value of each type of resource used by the container when the container works, and a specific container that needs to exclusively occupy a CPU. The scheduling module is responsible for selecting an appropriate node 102 for a deployed unit (a container or a pod) and another operation.

The manager 101 may run on one node 102 in the computing device cluster, or run on several nodes 102 in the computing device cluster (for high availability).

The node 102 is mainly configured to run a container. Each node 102 may further run components such as a kubelet and a container engine (container engine), and is responsible for life cycle management of a pod on the node. The kubelet is configured to: process a task delivered by the manager 101 to the node, and manage the pod and a container in the pod. The kubelet may register information about the node on the application programming interface server module, periodically report a resource usage condition of the node to the manager 101, and monitor container and node resources using a cAdvisor. The container engine may be responsible for container deployment, and the container engine may be, for example, a docker component.

A microservice can maintain running based on one or more containers. The microservice is a cloud-native architecture approach in which a single application program includes a large quantity of small, loosely coupled, and independently deployable components or services. Each microservice can run in an independent process. Microservices can communicate with each other using a lightweight communication mechanism (for example, through an HTTP-based RESTful API). Each microservice can be built based on a specific service and can be independently deployed in a production environment, a quasi-production environment, or the like.

In some embodiments, the user, a tenant, or an administrator may deliver, to the manager 101 based on a service requirement, an instruction for deploying a pod. The instruction may include information such as a quantity of pods, a quantity of containers included in each pod, a minimum resource request (Request) for resources used when each container works, and a maximum resource value (Limit). The resource in embodiments of this application may include a CPU resource, a memory resource, a network bandwidth resource, a disk resource, and the like. A resource request or a resource limit of a pod is a sum of resource requests or resource limits of all containers in the pod. Pods in the node 102 may be distinguished by using names or internet protocol (Internet Protocol, IP) addresses of the pods, and a plurality of nodes 102 may also be distinguished by using names or IP addresses of the nodes.

As shown in FIG. 2, an embodiment of the present invention provides a computing device 100, including a processor 1001, a memory 1002, a bus 1003, an input/output interface 1004, and a communication interface 1005. The bus 1003 is configured to: connect the processor 1001, the memory 1002, the input/output interface 1004, and the communication interface 1005, and implement data transmission between the processor 1001, the memory 1002, the input/output interface 1004, and the communication interface 1005. For example, the processor 1001 receives a command from the input/output interface 1004 through the bus 1003, decrypts the received command, and performs computation or data processing based on the decrypted command. The memory 1002 may include program modules, for example, a kernel (kernel), middleware (middleware), an application programming interface (API), and an application. The program module may include software, firmware, hardware, or at least two of the software, the firmware, and the hardware. The input/output interface 1004 forwards a command or data input by a user through an input device (for example, a sensor, a keyboard, or a touchscreen). The communication interface 1005 connects the computing device 100 to another computing device or a network. For example, the communication interface 1005 may be connected to a network in a wired or wireless manner, to be connected to another external computing device. Optionally, the computing device 100 may further include a display device, configured to: display, to the user, configuration information input by the user; display an operation interface to the user; and so on.

In some embodiments, the processor 1001 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 1002 includes a volatile memory (volatile memory), for example, a random access memory (random access memory, RAM). The memory 1002 may further include a non-volatile memory (non-volatile memory), for example, a read-only memory (read-only memory, ROM), a flash memory, a hard disk drive (hard disk drive, HDD), or a solid-state drive (solid-state drive, SSD).

The bus 1003 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, the bus is represented by using only one line in FIG. 2. However, it does not mean that there is only one bus or only one type of bus. The bus 1003 may include a path for transferring information between components (for example, the memory 1002, the processor 1001, and the communication interface 1005) of the computing device 100.

The communication interface 1005 uses a transceiver module, for example, but not limited to, a network interface card or a transceiver, to implement communication between the computing device 100 and another device or a communication network.

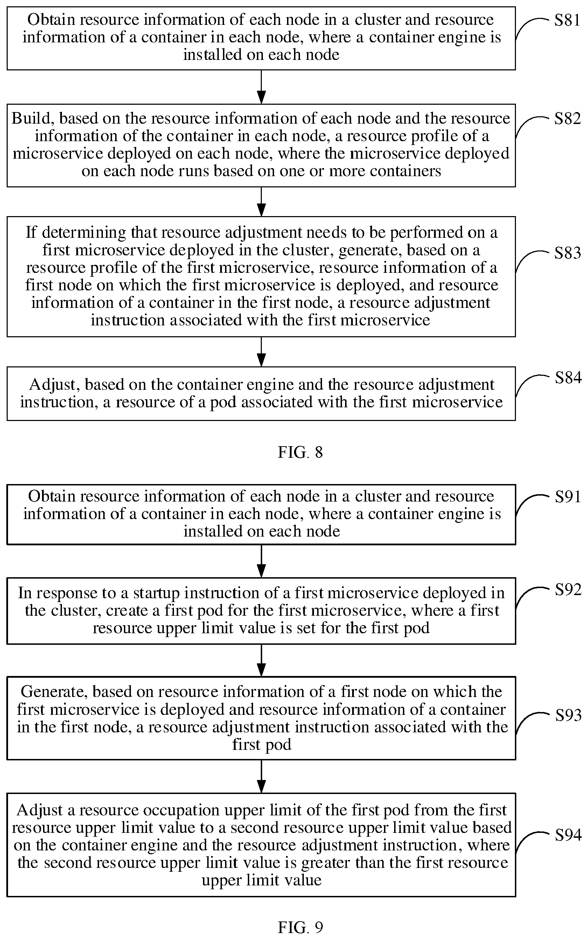

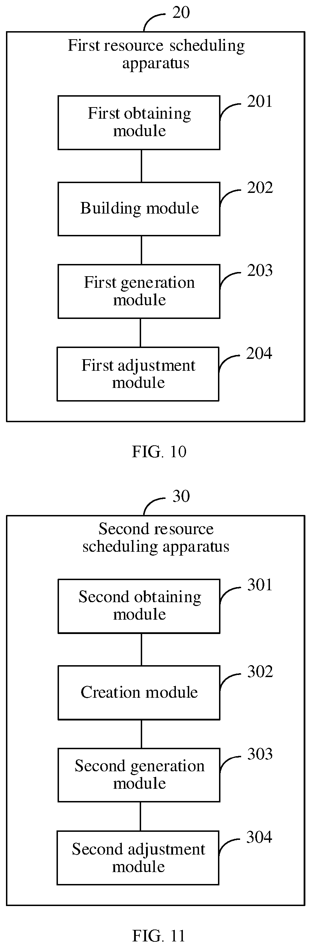

In some embodiments, the memory 1002 stores executable program code, and the processor 1001 executes the executable program code to separately implement functions of a first obtaining module 201, a building module 202, a first generation module 203, and a first adjustment module 204 shown in FIG. 10, to implement the resource scheduling method shown in FIG. 8. In other words, the memory 1002 stores instructions used to perform the resource scheduling method shown in FIG. 8. The processor 1001 may further execute the executable program code to separately implement functions of a second obtaining module 301, a creation module 302, a second generation module 303, and a second adjustment module 304 shown in FIG. 11, to implement the resource scheduling method shown in FIG. 9. In other words, the memory 1002 stores instructions used to perform the resource scheduling method shown in FIG. 9.

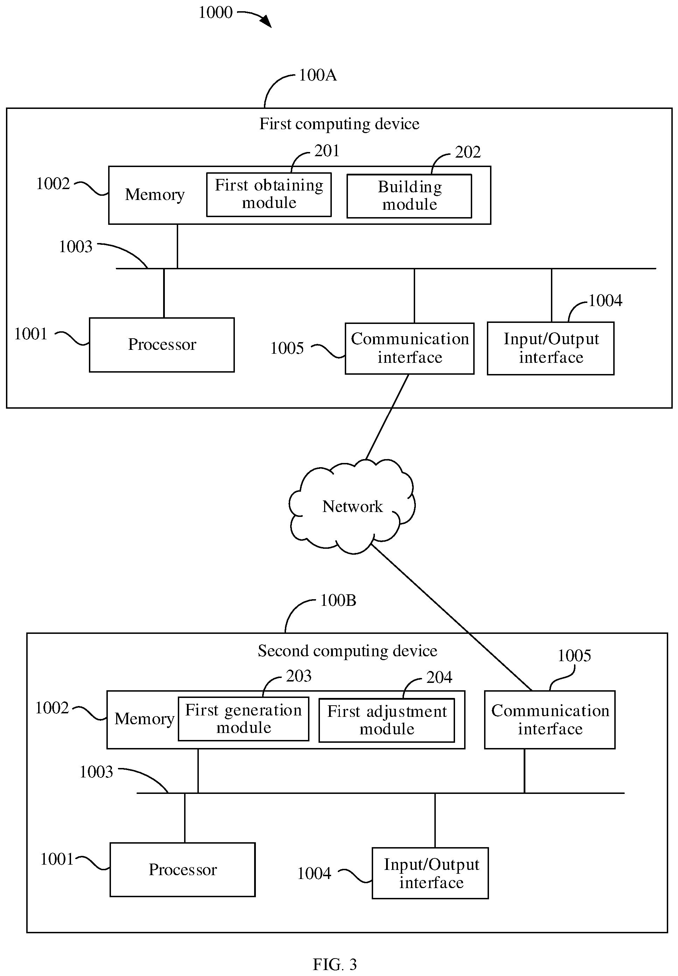

In some embodiments, a computing device cluster 1000 includes at least one computing device, for example, a first computing device 100A and a second computing device 100B in FIG. 3. The computing device 100 may be a server, for example, a central server, an edge server, or a local server in a local data center. In some embodiments, the computing device may alternatively be a terminal device, for example, a desktop computer, a notebook computer, or a smartphone.

As shown in FIG. 3, the computing device cluster 1000 includes at least one computing device. A memory 1002 in one or more computing devices in the computing device cluster may store same instructions used to perform the resource scheduling method shown in FIG. 8, or same instructions used to perform the resource scheduling method shown in FIG. 8.

In some possible implementations, the memory 1002 in the one or more computing devices in the computing device cluster each may alternatively store a part of the instructions used to perform the resource scheduling method shown in FIG. 8, or a part of the instructions used to perform the resource scheduling method shown in FIG. 9. In other words, a combination of one or more computing devices may jointly execute the instructions used to perform the resource scheduling method shown in FIG. 8, or the instructions used to perform the resource scheduling method shown in FIG. 9.

It should be noted that memories 1002 in different computing devices in the computing device cluster may store different instructions respectively used to perform parts of functions of the resource scheduling apparatus. To be specific, the instructions stored in the memories 1002 in the different computing devices 100 may implement a function of one or more of the first obtaining module 201, the building module 202, the first generation module 203, and the first adjustment module 204, or implement a function of one or more of the second obtaining module 301, the creation module 302, the second generation module 303, and the second adjustment module 304.

In some possible implementations, the one or more computing devices in the computing device cluster may be connected through a network. The network may be a wide area network, a local area network, or the like. FIG. 3 shows a possible implementation. As shown in FIG. 3, two computing devices (for ease of differentiation, respectively referred to as the first computing device 100A and the second computing device 100B below) are connected through a network. Specifically, each computing device is connected to the network through a communication interface in the computing device. In this possible implementation, a memory 1002 in the first computing device 100A may store instructions for performing functions of the first obtaining module 201 and the building module 202. In addition, a memory 1002 in the second computing device 100B may store instruction for performing functions of the first generation module 203 and the first adjustment module 204. Similarly, the memory 1002 in the first computing device 100A may further store instructions for performing functions of the second obtaining module 301 and the creation module 302. In addition, the memory 1002 in the second computing device 100B may further store instructions for performing functions of the second generation module 303 and the second adjustment module 304.

A connection manner between computing device clusters shown in FIG. 3 may be as follows: In consideration of that a large amount of data needs to be stored and read in the resource scheduling method provided in this application, it is considered that the functions implemented by the first generation module 203 and the first adjustment module 204 are performed by the second computing device 100B.

It should be understood that functions of the first computing device 100A shown in FIG. 3 may alternatively be completed by a plurality of computing devices 100. Similarly, functions of the second computing device 100B may alternatively be completed by a plurality of computing devices 100.

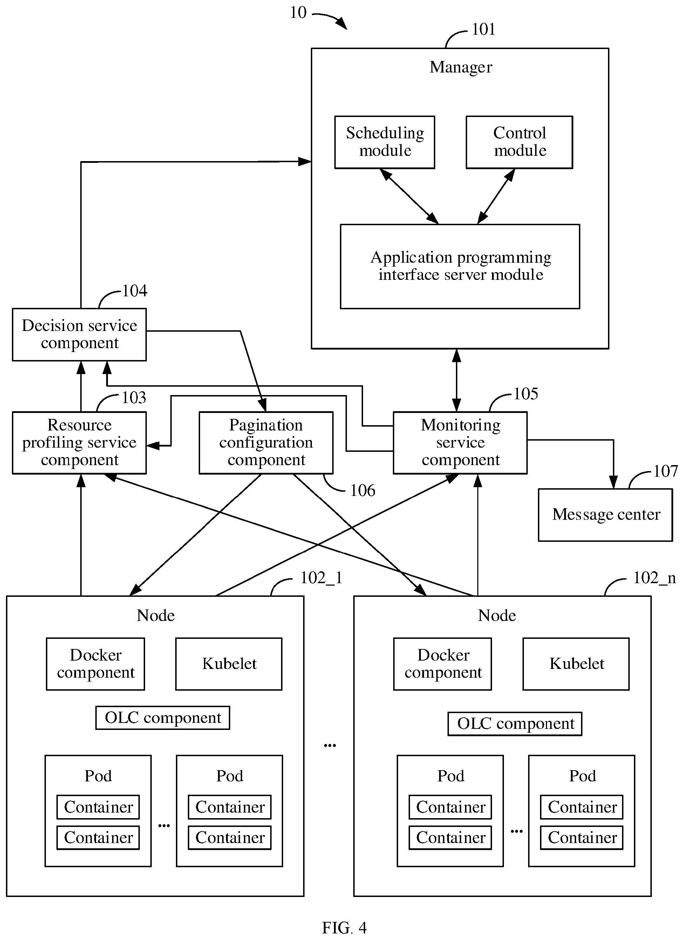

With reference to FIG. 4, the following describes an example of a diagram of an architecture of a resource scheduling system in this application.

In this embodiment, the resource scheduling system 10 includes a manager 101, a node, a resource profiling service component 103, a decision service component 104, a monitoring service component 105, and a pagination configuration component 106. A quantity of nodes is not limited in this embodiment of this application, and the quantity of nodes may be set based on an actual service deployment requirement. In FIG. 3, an example in which the resource scheduling system 10 includes n nodes 102_1 to 102_n is used for description, where n is a positive integer greater than 1. A value of n is not limited in this application.

The n nodes 102_1 to 102_n may be connected over a communication network, and the communication network may be a wired network or a wireless network. The communication network may be implemented by using any known network communication protocol. The network communication protocol may be various wired or wireless communication protocols, such as Ethernet, universal serial bus (universal serial bus, USB), global system for mobile communications (global system for mobile communications, GSM), general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), wireless fidelity (wireless fidelity, Wi-Fi), voice over internet protocol (voice over Internet protocol, VoIP), a communication protocol that supports a network slicing architecture, or any other appropriate communication protocol.

In some embodiments, the manager 101, the resource profiling service component 103, the decision service component 104, the monitoring service component 105, and the pagination configuration component 106 may run on a same node, or run on two or more nodes. For example, the manager 101 runs on one node, and the resource profiling service component 103, the decision service component 104, the monitoring service component 105, and the pagination configuration component 106 run on another node. The resource profiling service component 103, the decision service component 104, the monitoring service component 105, and the pagination configuration component 106 may be deployed on the node in a form of plug-ins.

The monitoring service component 105 may be configured to collect resource information of the nodes 102_1 to 102_n, and resource occupation information, request information, and limit information of containers deployed on the nodes 102_1 to 102_n. The resource information of the node may include information such as a total quantity of each type of resource on the node, a quantity of used resources, a quantity of remaining resources, and usage of each type of resource.

Resource occupation information, request information, or limit information of pods deployed on the nodes 102_1 to 102_n may be obtained based on a sum of resource occupation information, request information, or limit information of containers included in the pods. Similarly, resource occupation information, request information, or limit information of microservices deployed on the nodes 102_1 to 102_n may also be obtained based on a sum of resource occupation information, request information, or limit information of containers associated with the microservices.

Resource occupation information of the container, the pod, or the microservice may be a quantity of each type of resource (CPU resources, memory resources, disk resources, and network bandwidth resources) occupied by the pod, the container, or the microservice.

In some embodiments, the monitoring service component 105 may include a prometheus component. The prometheus component is a tool for collecting and aggregating specified metrics as time series data. For example, the monitoring service component 105 may collect, in real time by using the prometheus component, the resource information of the nodes 102_1 to 102_n, and the resource occupation information, request information, and limit information of the containers deployed on the nodes 102_1 to 102_n.

Overload control (OverLoad Control, OLC) components may be further deployed on the nodes 102_1 to 102_n. The OLC components collect, in real time, the resource occupation information of the microservices deployed on the nodes 102_1 to 102_n, to determine whether a microservice with insufficient resources exists. When the decision service component 104 determines, based on the resource occupation information that is of the microservices and that is collected by the OLC components, that a specific microservice has a traffic burst and therefore has insufficient resources, the decision service component 104 may trigger scale-out on the microservice, to meet a resource requirement required for running the microservice. The insufficient resources may mean that one or more of CPU resources, memory resources, disk resources, network bandwidth resources, and the like allocated to the microservice are insufficient. When the decision service component 104 determines, based on the resource occupation information that is of the microservices and that is collected by the OLC components, that a specific microservice has excessive resources, the decision service component 104 may further trigger scale-in on the microservice, to improve utilization of node resources.

In some embodiments, the monitoring service component 105 may further collect running metric data of the nodes 102_1 to 102_n and the microservices deployed on the nodes 102_1 to 102_n, to obtain running statuses of the nodes and the microservices. For example, the monitoring service component 105 may determine whether the node runs abnormally (whether there is a disk exception, a network exception, or the like), and check the running status of the microservice, to monitor, in real time, a running status of the microservice before or after resource adjustment. For a node and a microservice deployed on the node, specific running metric data of the node and the microservice that needs to be collected by the monitoring service component 105 may be set based on an actual requirement, to obtain running statuses of the node and the microservice.

In some embodiments, the monitoring service component 105 may further listen to an event triggered by the manager 101, for example, microservice creation, deletion, or upgrade, or scale-out or scale-in for microservice/pod resources that is triggered by the manager 101. The monitoring service component 105 may report the detected event to the decision service component 104, and the decision service component 104 makes a decision and delivers an instruction. The monitoring service component 105 may further notify an operations and maintenance engineer of the detected event by using a short messaging service message or an email, so that the operations and maintenance engineer learns of a change of a computing device cluster in time. For example, the resource scheduling system 10 further includes a message center 107, the monitoring service component 105 may further notify the message center 107 of the detected event, and the message center 107 notifies the operations and maintenance engineer by using a short messaging service message or an email.

In some embodiments, the resource profiling service component 103 is configured to receive the resource information of the nodes 102_1 to 102_n, the resource occupation information, request information, and limit information of the containers deployed on the nodes 102_1 to 102_n, and the like that are collected by the monitoring service component 105. The resource profiling service component 103 may summarize and analyze the information collected by the monitoring service component 105, to implement resource profiling on each microservice. The monitoring service component 105 may collect resource occupation historical data of node resources, containers, pods, and microservices, and the resource profiling service component 103 summarizes and analyzes the data to generate resource profiles of the microservices, to facilitate subsequent resource adjustment on the microservices/pods.

In some embodiments, the resource profile may include a resource occupation dimension and a time dimension. The resource occupation dimension may represent a feature of a resource occupied by the microservice, for example, a feature of a CPU resource, a memory resource, a network bandwidth resource, or a disk I/O resource occupied by the microservice. The time dimension and the resource occupation dimension may represent features of resources occupied by the microservice at different time. For example, traffic of an internet-based microservice is affected by production and life of people, showing distinct peaks and troughs, periodicity, and predictability. Alternatively, a scheduled microservice also has periodicity and predictability. A local lifestyle microservice has peaks during lunchtime and evening hours. A traffic peak of an e-commerce microservice in a promotion phase is several times higher than a trough. If the resource scheduling system 10 can capture the information, the resource scheduling system 10 may flexibly allocate resources based on statues of the node and the microservice, to implement dynamic allocation of microservice resources, and meet a service level agreement (Service Level Agreement, SLA) requirement of the microservice to a maximum extent.

In some embodiments, the resource profiling service component 103 may be integrated with a data processing model to summarize and analyze the information collected by the monitoring service component 105. For example, the data processing model may use a quantile algorithm (where a quantile is for a resource requirement of the microservice) to perform resource profiling on the microservice. Alternatively, the data processing model may use another artificial intelligence algorithm to perform resource profiling on the microservice. This is not limited in this application.

The resource profiling service component 103 may report, to the decision service component 104, both the built resource profiles and the information collected by the monitoring service component 105. The decision service component 104 may make a resource scheduling decision based on the resource profiles built by the resource profiling service component 103, the information collected by the monitoring service component 105, and running statuses of the nodes. For example, if a specific node is in an abnormal running state (where there is a disk exception, a network exception, or the like), scheduling isolation is performed on the node, to be specific, the decision service component 104 does not perform resource adjustment on a pod that meets a resource adjustment condition and that is on the node. After the node recovers to normal running, the decision service component 104 performs resource adjustment on the pod that meets the resource adjustment condition and that is on the node. The pod that meets the resource adjustment condition may be a pod associated with a microservice that needs to be scaled out/in.

For example, the decision service component 104 may predict, based on the resource profiles of the microservices, that a specific microservice needs to be scaled out in a specific time period, and may deliver a resource adjustment instruction for the microservice preset time in advance, to meet a service processing requirement of the microservice. For example, the microservice is a lifestyle microservice, and has a traffic peak from 7:00 to 9:00 in the evening. In this case, the decision service component 104 may perform resource adjustment on the lifestyle microservice five minutes in advance, and a specific quantity of resources to be adjusted may be estimated and set based on the resource profile. For example, the microservice is an e-commerce microservice, and is planned to have a major promotion during a specific time period. In this case, the decision service component 104 may deliver a resource adjustment instruction for the microservice before the major promotion starts, to meet a service processing requirement of the microservice. A specific quantity of resources to be adjusted may be estimated and set based on traffic data of a historical major promotion.

When the OLC component detects that traffic of a specific microservice increases, causing resources of the microservice to approach overload, the decision service component 104 may also deliver a resource adjustment instruction for the microservice, to meet a service processing requirement of the microservice. The decision service component 104 delivers the resource adjustment instruction to a node through the pagination configuration component 106, and performs, through a docker component on the node, resource adjustment on a pod that meets a resource adjustment condition. In this way, resource adjustment can be implemented within seconds, and a delay is lower compared with resource adjustment performed using an HPA/VPA.

In some embodiments, when resource adjustment is performed on the microservice, the resource adjustment may be performed on all pods associated with the microservice, or may be performed on one or several specific pods in the microservice, provided that an adjusted pod can enable the microservice to have sufficient resources to handle a current service volume/traffic increase problem.

In some embodiments, for the pod that meets the resource adjustment condition, the decision service component 104 may automatically deliver the resource adjustment instruction to the pagination configuration component 106, to trigger the resource adjustment on the pod that meets the resource adjustment condition. For the pod that meets the resource adjustment condition, the decision service component 104 may alternatively provide a corresponding resource adjustment suggestion, and notify, through the message center 107, the operations and maintenance engineer of the resource adjustment suggestion for decision making. To be specific, the operations and maintenance engineer may manually deliver a resource adjustment instruction to the pagination configuration component 106, to trigger the resource adjustment on the pod that meets the resource adjustment condition. The resource adjustment instruction may include the pod for which resource adjustment needs to be performed and a resource adjustment manner of the pod. The resource adjustment manner of the pod may be increasing a resource limit of the pod by a1, decreasing a resource limit of the pod by a2, setting a resource limit of the pod to a3, or the like. Values of a1, a2, and a3 may be set based on an actual requirement. It may be understood that a1, a2, and a3 each may be a set including set values of resources such as CPU resources, memory resources, disk I/O resources, and network bandwidth resources.

The pagination configuration component 106 may be configured to deliver the resource adjustment instruction to the node. A kubelet on the node may listen to the resource adjustment instruction delivered by the pagination configuration component 106, and determine whether resource adjustment is to be performed on a pod on the node. If the kubelet determines that resource adjustment is not to be performed on the pod on the node, the resource adjustment instruction may be ignored. If the kubelet determines that resource adjustment is to be performed on the pod on the node, the kubelet may continue to determine, based on the resource adjustment instruction, a specific pod that is on the node and on which resource adjustment is to be performed. For the pod on which resource adjustment needs to be performed, the kubelet may control the pod to invoke a unix-socket to communicate with a docker process (a process of the docker component) and invoke a docker API to perform resource adjustment.

In some embodiments, the pagination configuration component 106 may be a ZooKeeper. The ZooKeeper may accept registration of a listener. Once some data changes, the ZooKeeper may notify a listener that has been registered with the ZooKeeper to make a corresponding response. That is, the kubelet on the node may be registered with the ZooKeeper, to listen to a resource adjustment instruction delivered by the ZooKeeper.

In some embodiments, the docker component may set a limited CPU resource, memory resource, disk resource, network bandwidth resource, and the like for each process, to set a resource access limit for the process. A bottom layer of the docker component is implemented through control groups (Control groups, Cgroups). Cgroups is a function of a Linux kernel, and can be used to restrict, control, and separate resources of a process group. Resource control in Cgroups is implemented in a unit of a control group. A process may be added to a specific control group, or may be migrated from one process group to another control group. For processes in a process group, Cgroups can be used to allocate resources in the unit of a control group. In addition, the processes are subject to limitations set by Cgroups in the unit of a control group. Cgroups can implement functions such as limiting a quantity of resources that can be used by the process group, controlling a priority of the process group, recording a quantity of resources used by the process group, isolating the process group, and controlling the process group. When the docker component is deployed on the node, Cgroups information is mounted under a /sys/fs/cgroup/cpu/kubebpods/burstable/podxxx directory on the node by default. In this way, each process has independent configuration information, and the docker API can be invoked to update the configuration information of the process and implement resource adjustment on the pod.

In some embodiments, different priorities are configured for microservices in a preset manner. For example, a priority of the microservice may be configured by using an annotation option of the microservice. When a node has insufficient resources, the resource profiling service component 103 may obtain priorities of microservices, and transmit priority information to the decision service component 104. The decision service component 104 may release a resource of a microservice with a low priority to a higher-priority microservice based on the priorities of the microservices and resource utilization data of the microservices. If a resource cannot be released from the lower-priority microservice, the decision service component 104 may further schedule, based on resource profiles of the microservices, a lower-priority microservice that is currently inactive (in a sleep state) to another node, so that more resources can be allocated to the microservice with the high priority. For example, if a current moment is a moment at night, a lower-priority microservice that is only active during the day but in a sleep state at night may be scheduled to another node, so that more resources can be released for a higher-priority microservice without affecting running of the lower-priority microservice.

For example, a plurality of microservices are deployed on the node 102_1, the plurality of microservices include a computational microservice, and a highest priority is configured for the computational microservice. In a running process of a pod associated with the computational microservice, if a running speed of a process is limited due to a small CPU limit, memory usage is close to a limit, or another case occurs, the resource profiling service component 103 may obtain a priority of each microservice on the node 102_1, and the decision service component 104 may obtain, through decision-making and analysis with reference to resource information of the node 102_1 and resource occupation information of each microservice, a resource (for example, a CPU resource or a memory resource) that can be additionally allocated to the pod associated with the computational microservice. In this way, a computing speed of the computational microservice can be accelerated, and node resources can be fully utilized.

In some embodiments, when the OLC component detects that traffic of a specific microservice increases, causing resources of the microservice to approach overload, the decision service component 104 may alternatively deliver a pod scaling request to the manager 101, and the manager 101 may perform, through the HPA and/or the VPA, resource adjustment on a pod that meets a resource adjustment condition. When resource adjustment is performed on the microservice using the HPA/VPA, the HPA/VPA collects resource metrics of the microservice in a latest preset time period, calculates an average value, compares the average value with a target value, and performs resource adjustment based on a comparison result. Therefore, the resource adjustment performed using the HPA/VPA has a response delay problem. In addition, a default scale-out cooling periodicity of the HPA/VPA is three minutes, which further amplifies the response delay problem.

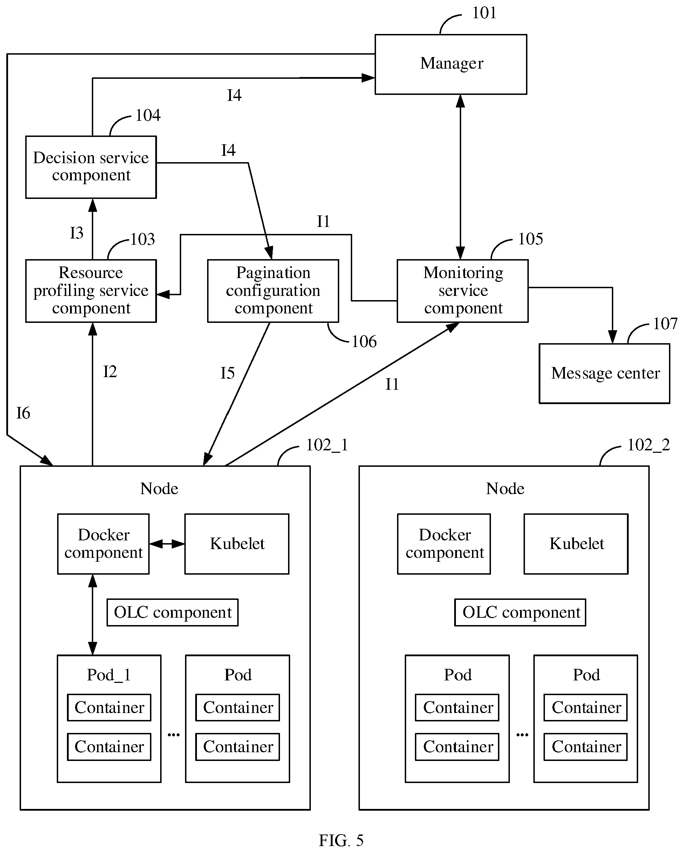

With reference to FIG. 5, the following describes an example of a diagram of an interaction procedure of resource scheduling in a microservice traffic change scenario according to this application.

An application scenario of the resource scheduling in this embodiment is described by using an example in which traffic of a microservice S1 increases. For example, the microservice S1 is an e-commerce microservice. Traffic of the e-commerce microservice greatly increases when a flash sale event or e-commerce live streaming of a specific type of product is launched at a specific moment. In this embodiment, an example in which a resource scheduling system 10 includes a manager 101, a node 102_1, a node 102_2, a resource profiling service component 103, a decision service component 104, a monitoring service component 105, a pagination configuration component 106, and a message center 107 is used.

In some embodiments, the manager 101, the resource profiling service component 103, the decision service component 104, the monitoring service component 105, the pagination configuration component 106, and the message center 107 may all be deployed on the node 102_1. The monitoring service component 105 may include a prometheus component, and an OLC component may be deployed on the node 102_1. It is assumed that the microservice S1 is deployed on the node 102_1, and a pod associated with the microservice S1 is a pod_1. In this case, an internal interaction procedure in which the resource scheduling system 10 implements resource scheduling for the microservice S1 includes the following steps.

I1: The prometheus component collects resource information of the node 102_1, and resource occupation information, request information, and limit information of a container deployed on the node 102_1, and reports the information to the resource profiling service component 103.

I2: The OLC component collects resource occupation information of the microservice S1 deployed on the node 102_1, and reports the resource occupation information to the decision service component 104.

I3: The resource profiling service component 103 builds a resource profile of the microservice S1 based on the information collected by the prometheus component, and reports the resource profile of the microservice S1 and the information collected by the prometheus component to the decision service component 104.

I4: If the decision service component 104 determines, based on the resource occupation information that is of the microservice S1 and that is collected by the OLC component, that resource adjustment needs to be performed on the microservice S1, the decision service component 104 delivers a resource adjustment instruction to the pagination configuration component 106 or delivers a pod scaling request to the manager 101 based on the resource profile of the microservice S1 and the information collected by the prometheus component.

For example, if the resource occupation information that is of the microservice S1 and that is collected by the OLC component is close to a limit or has reached the limit, the decision service component 104 may determine that the traffic of the microservice S1 increases greatly. To ensure that the microservice S1 can run normally, resource adjustment needs to be performed on the microservice S1, to ensure that the microservice S1 has sufficient resources to maintain normal running.

For example, if the resource occupation information that is of the microservice S1 and that is collected by the OLC component differs greatly from the limit, the decision service component 104 may determine that the microservice S1 has excessive idle resources. To ensure that resources on the node 102_1 can be fully utilized, resource adjustment needs to be performed on the microservice S1, so that the node 102_1 has sufficient remaining resources to be allocated to another microservice with insufficient resources.

I5: If the decision service component 104 delivers the resource adjustment instruction to the pagination configuration component 106, a kubelet listens to the resource adjustment instruction transferred by the pagination configuration component 106, and controls the pod_1 to invoke a unix-socket to communicate with a docker process, to invoke a docker API to perform resource adjustment on the pod_1.

For example, invoking the docker API to perform resource adjustment on the pod_1 may be invoking the docker API to adjust a Cgroup parameter of the pod_1, to adjust a resource of the pod_1.

I6: If the decision service component 104 delivers the pod scaling request to the manager 101, the manager 101 performs resource adjustment on the pod_1 through an HPA and/or a VPA.

In some embodiments, the prometheus component may further listen to a resource adjustment result of the pod_1, and notify the message center 107 of the resource adjustment result, so that the message center 107 may notify an operations and maintenance engineer of the resource adjustment result of the pod_1 by using a short messaging service message or an email.

In some embodiments, the prometheus component may further listen to a running status of the microservice S1 after performing resource adjustment on the pod_1, and feed back the running status to the decision service component 104. The decision service component 104 checks the running status of the microservice S1 using the prometheus component, to determine whether an adjusted resource meets running of the microservice S1. If the microservice S1 still runs abnormally due to insufficient resources, the decision service component 104 may be triggered again to perform resource adjustment on the microservice S1.

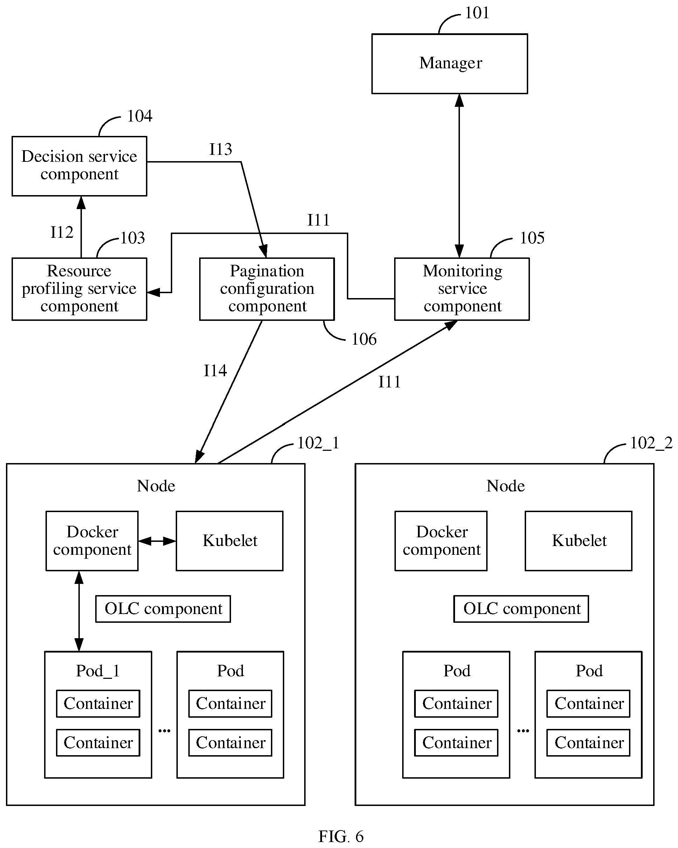

With reference to FIG. 6, the following describes an example of a diagram of an interaction procedure of resource scheduling in a microservice startup phase according to this application.

An application scenario of the resource scheduling in this embodiment is described by using an example in which a microservice S1 is started. In this embodiment, an example in which a resource scheduling system 10 includes a manager 101, a node 102_1, a node 102_2, a resource profiling service component 103, a decision service component 104, a monitoring service component 105, and a pagination configuration component 106 is used. The microservice S1 may be an e-commerce microservice, a computational microservice, a lifestyle microservice, or the like. This is not limited in this embodiment.

When the microservice S1 is started, a large amount of initialization work is usually performed, such as image file pulling, tomcat container startup, SpringMVC/SpringBoot initialization, bean instantiation, service instantiation, and container engine base component instantiation. Startup time is proportional to a scale (for example, a code volume of the microservice) of the microservice, a quantity of RESTful APIs, and a quantity of external dependent components, and is inversely proportional to a container resource specification. The shorter the startup time of the microservice S1, the faster a pod generated for the microservice S1 through an HPA or a VPA is ready. Therefore, stability and a throughput of a cluster can be improved.

It is assumed that the microservice S1 is deployed on the node 102_1, and a pod associated with the microservice S1 is a pod_1. In this case, an internal interaction procedure in which the resource scheduling system 10 implements resource scheduling for the microservice S1 includes the following steps.

I11: The monitoring service component 105 collects resource information of the node 102, and resource occupation information, request information, and limit information of a container deployed on the node 102_1, and transfers the information to the resource profiling service component 103.

For example, the monitoring service component 105 includes a prometheus component, and may collect, using the prometheus component, the resource information of the node 102, and the resource occupation information, request information, and limit information of the container deployed on the node 102_1.

I12: The resource profiling service component 103 aggregates the information collected by the monitoring service component 105, and transfers an information aggregation result to the decision service component 104.

I13: When detecting a creation event of the pod_1, the decision service component 104 analyzes and calculates a resource that can be additionally allocated by the node 102_1 to the pod_1 currently, and delivers a resource adjustment instruction to the pagination configuration component 106.

In some embodiments, when creating the pod_1, the manager 101 sets a resource request and a resource limit of the pod_1. To shorten the startup time of the microservice S1, the resource limit may be increased. To be specific, the resource limit of the pod_1 is increased by calculating the resource that can be additionally allocated by the node 102_1 to the pod_1 currently.

In some embodiments, the monitoring service component 105 may listen to an event of creating the pod_1 by the manager 101, and notify the decision service component 104 of the creation event of the pod_1.

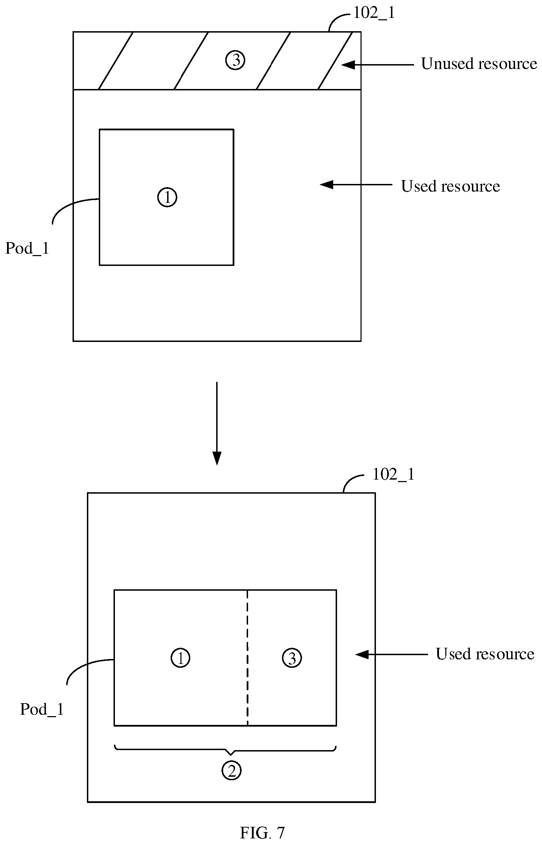

For example, as shown in FIG. 7, an unused resource ③ may be allocated to the pod_1, so that a resource of the pod_1 changes from a resource ① set by the manager 101 to a resource ②, to quickly start the microservice S1. After the monitoring service component 105 determines, through running status detection, that the microservice S1 is successfully started, the decision service component 104 reclaims the resource additionally allocated to the pod_1, that is, the resource of the pod_1 changes from the resource ② to the resource ① again.

For example, the resource additionally allocated to the pod_1 may mean changing a CPU limit of the pod_1 from two cores to four cores, changing a memory limit from b1 MB to b2 MB, and so on, where b2 is greater than b1.

I14: The pagination configuration component 106 delivers the resource adjustment instruction to a pod service, and the pod service controls the pod_1 to invoke a unix-socket to communicate with a docker process, to invoke a docker API to perform resource adjustment on the pod_1.

In some embodiments, the pod service may refer to a component that is on the node and that is configured to manage a pod, for example, a kubelet.

In some embodiments, a resource request and a resource limit of each microservice, aggregated information of the resource profiling service component 103, decision-making information of the decision service component 104, and the like may be all stored in a preset database. In addition, the preset database may record a unique identifier (for example, a name or an IP address) of each pod and an allocated resource. If the resource profiling service component 103/decision service component 104 is abnormal, correct resource information may be obtained from the preset database, to avoid excessive resource allocation or excessive resource reclaim on the pod.

With reference to FIG. 8, an embodiment of this application provides a resource scheduling method. The method may be applied to a computing device cluster. In this embodiment, the resource scheduling method may include the following steps.

Step S81: Obtain resource information of each node in the cluster and resource information of a container in each node, where a container engine is installed on each node.

In some embodiments, a prometheus component and an OLC component may be deployed in the cluster to collect, in real time, the resource information of each node, and resource occupation information, request information, and limit information of the container deployed on each node. The container engine may be a docker component. The docker component is deployed on each node, so that each node can quickly perform resource adjustment on a microservice through the docker component.

In some embodiments, the resource information may include information such as a total quantity of each type of resource, a quantity of used resources, a quantity of remaining resources, and usage of each type of resource. The resource in embodiments of this application may include a CPU resource, a memory resource, a network bandwidth resource, a disk resource, and the like.

Step S82: Build, based on the resource information of each node and the resource information of the container in each node, a resource profile of a microservice deployed on each node, where the microservice deployed on each node runs based on one or more containers.

In some embodiments, after the resource information of each node in the cluster and the resource information of the container in each node are obtained, the resource profile of the microservice deployed on each node may be built based on the resource information of each node and the resource information of the container in each node. For example, resource information of the microservice deployed on each node may be first obtained based on the resource information of the container in each node, and then the resource profile of the microservice deployed on each node is built based on the resource information of each node and the resource information of the microservice deployed on each node. In the resource profile, a time dimension and a resource occupation dimension may be used to represent features of resources occupied by the microservice at different time. Therefore, when the resource adjustment is subsequently performed on the microservice, resource allocation may be performed based on the resource profile of the microservice, so that the resource adjustment of the microservice is more targeted, and resource utilization of the node can be improved.

Step S83: If determining that resource adjustment needs to be performed on a first microservice deployed in the cluster, generate, based on a resource profile of the first microservice, resource information of a first node on which the first microservice is deployed, and resource information of a container in the first node, a resource adjustment instruction associated with the first microservice.

In some embodiments, a microservice with insufficient resources or a microservice with excessive resources may be determined as the first microservice on which resource adjustment needs to be performed. For example, if a difference between a resource occupied by the first microservice and a resource upper limit value of the first microservice is less than a first preset threshold, it indicates that the first microservice has insufficient resources, and scale-out is triggered for the first microservice to meet a resource requirement required for running the first microservice. If a difference between a resource occupied by the first microservice and a resource upper limit value of the first microservice is greater than a second preset threshold, it indicates that the first microservice has excessive resources, and scale-in is triggered for the first microservice to allocate an excess resource to another microservice with insufficient resources.

For example, the resource occupied by the first microservice includes one or more of the following: a processor resource, a memory resource, a disk resource, and a network bandwidth resource. If a difference between a corresponding resource upper limit value and any one of the processor resource, the memory resource, the disk resource, and the network bandwidth resource occupied by the first microservice is less than a corresponding first preset threshold, it indicates that one or more types of resources of the microservice are insufficient, and it is determined that the microservice needs to be scaled out. If a difference between a corresponding resource upper limit value and any one of the processor resource, the memory resource, the disk resource, and the network bandwidth resource occupied by the first microservice is greater than a corresponding second preset threshold, it indicates that one or more types of resources of the microservice are excessive, and it is determined that the microservice needs to be scaled in.

When the resource adjustment instruction associated with the first microservice is generated, a quantity of resources required by the microservice may be predicted based on the resource profile of the first microservice, and then a resource is allocated to the first microservice based on the predicted quantity of resources, the resource information of the node on which the first microservice is deployed, and the resource information of the container in the node, so that the resource adjustment of the microservice is more accurate, excessive resource allocation or insufficient resource allocation is avoided, and resource utilization of the node is improved. When the resource adjustment instruction associated with the first microservice is generated, the resource adjustment may be performed on all pods associated with the microservice, or may be performed on one or several specific pods in the microservice, provided that an adjusted pod can enable the microservice to have sufficient resources to handle a current service volume/traffic increase problem.

Step S84: Adjust, based on the container engine and the resource adjustment instruction, a resource of a pod associated with the first microservice.

When the resource adjustment is performed on the microservice, whether the resource adjustment instruction instructs to perform resource adjustment on all the pods associated with the microservice or to perform resource adjustment on one or several pods in the microservice may be first determined, and a resource adjustment application programming interface is invoked using the container engine to perform resource adjustment on the specified pod, so that the resource adjustment has a low delay, resource adjustment can be implemented within seconds, and a capability of the microservice deployed in the cluster to handle a traffic burst is enhanced.

For example, the container engine is a docker component. The docker component may set a limited CPU resource, memory resource, disk resource, network bandwidth resource, and the like for each process, to set a resource access limit for the process. A bottom layer of the docker component is implemented through Cgroups. Cgroups can implement functions such as limiting a quantity of resources that can be used by a process group, controlling a priority of the process group, recording a quantity of resources used by the process group, isolating the process group, and controlling the process group. When the docker component is deployed on the node, Cgroups information may be mounted under a /sys/fs/cgroup/cpu/kubebpods/burstable/podxxx directory on the node by default. In this way, each process has independent configuration information, and the container engine may invoke a docker API in response to the resource adjustment instruction, to update the configuration information of the process and implement resource adjustment on the pod associated with the first microservice.

In some embodiments, different priorities may be configured for microservices deployed on each node in a preset manner. When the resource adjustment is performed on the first microservice deployed on the node, if the node has insufficient resources and a resource adjustment requirement of the first microservice cannot be met, a resource of a specific microservice that is deployed on the node and whose priority is lower than that of the first microservice may be released, so that the node has sufficient idle resources to be allocated to the first microservice. For example, the microservice that is deployed on the node and whose priority is lower than that of the first microservice is a second microservice. In this case, a part of resources occupied by the second microservice may be released based on a resource profile of the second microservice. A quantity of resources that can be currently released from the second microservice without affecting running of the second microservice may be determined and estimated based on the resource profile of the second microservice.

In some embodiments, if a resource cannot be released from a microservice with a low priority, or a policy of releasing a resource from a microservice with a low priority is not used, a specific microservice that is deployed on the node and whose priority is lower than that of the first microservice may be migrated to another node, so that the node has sufficient idle resources to be allocated to the microservice on which resource adjustment needs to be performed. For example, a third microservice that is deployed on the node and whose priority is lower than that of the first microservice is migrated to another node in the cluster, so that the node has sufficient idle resources to be allocated to the microservice on which resource adjustment needs to be performed.

In some embodiments, the third microservice that can be scheduled to the another node in the cluster may be selected based on resource profiles of microservices deployed on the node. For example, if a current moment is a moment at night, the lower-priority third microservice that is only active during the day but in a sleep state at night may be selected and scheduled to the another node, so that more resources can be released for the higher-priority first microservice without affecting running of the lower-priority third microservice.

With reference to FIG. 9, another embodiment of this application provides a resource scheduling method. The method may be applied to a computing device cluster. **In** this embodiment, the resource scheduling method may include the following steps.

Step S91: Obtain resource information of each node in the cluster and resource information of a container in each node, where a container engine is installed on each node.

**In** some embodiments, a prometheus component and an OLC component may be deployed in the cluster to collect, in real time, the resource information of each node, and resource occupation information, request information, and limit information of the container deployed on each node. The container engine may be a docker component. The docker component is deployed on each node, so that each node can quickly perform resource adjustment on a microservice through the docker component.

**In** some embodiments, the resource information may include information such as a total quantity of each type of resource, a quantity of used resources, a quantity of remaining resources, and usage of each type of resource. The resource in embodiments of this application may include a CPU resource, a memory resource, a network bandwidth resource, a disk resource, and the like.

Step S92: **In** response to a startup instruction of a first microservice deployed in the cluster, create a first pod for the first microservice, where a first resource upper limit value is set for the first pod.

The first microservice may be any microservice deployed in the cluster. When starting the first microservice, the cluster may create the first pod for the first microservice, and maintain running of the first microservice by using the first pod. The cluster sets the first resource upper limit value (Limit) for the first pod.

Step S93: Generate, based on resource information of a first node on which the first microservice is deployed and resource information of a container in the first node, a resource adjustment instruction associated with the first pod.

**In** a startup process of the microservice, a resource occupation upper limit allocated by a system to the microservice is increased based on the resource information of the first node of the first microservice deployed in the cluster and the resource information of the container in the first node, to quickly start the microservice and shorten startup time of the microservice.

For example, an unused idle resource in the first node may be allocated to the first pod, to increase the resource occupation upper limit allocated by the system to the microservice, so as to quickly start the first microservice.

Step S94: Adjust a resource occupation upper limit of the first pod from the first resource upper limit value to a second resource upper limit value based on the container engine and the resource adjustment instruction, where the second resource upper limit value is greater than the first resource upper limit value.

A resource adjustment application programming interface is invoked using the container engine, to adjust the resource occupation upper limit of the first pod from the first resource upper limit value to the second resource upper limit value. **In** this way, resource adjustment has a low delay, and resource adjustment can be implemented within seconds. For example, the container engine is a docker component, and a bottom layer of the docker component is implemented through Cgroups. When the docker component is deployed on the node, Cgroups information may be mounted under a /sys/fs/cgroup/cpu/kubebpods/burstable/podxxx directory on the node by default. **In** this way, each process has independent configuration information, and the container engine may invoke a docker API in response to the resource adjustment instruction, to adjust the resource occupation upper limit of the first pod from the first resource upper limit value to the second resource upper limit value.

In some embodiments, after the first microservice is successfully started, the resource occupation upper limit of the first pod may be adjusted from the second resource upper limit value to the first resource upper limit value. In other words, after the first microservice is started, a resource that is additionally allocated to the first microservice previously to shorten the startup time of the first microservice is reclaimed, to avoid resource excess in the first microservice, and improve resource utilization of the node.

With reference to FIG. 10, an embodiment of this application provides a first resource scheduling apparatus 20. The first resource scheduling apparatus 20 may include a first obtaining module 201, a building module 202, a first generation module 203, and a first adjustment module 204.

The first obtaining module 201 is configured to obtain resource information of each node in a cluster and resource information of a container in each node. A container engine may be installed on each node.

The building module 202 is configured to build, based on the resource information of each node and the resource information of the container in each node, a resource profile of a microservice deployed on each node. The microservice deployed on each node may run based on one or more containers.

The first generation module 203 is configured to: when resource adjustment needs to be performed on a first microservice deployed in the cluster, generate, based on a resource profile of the first microservice, resource information of a first node on which the first microservice is deployed, and resource information of a container in the first node, a resource adjustment instruction associated with the first microservice.

The first adjustment module 204 is configured to adjust, based on the container engine and the resource adjustment instruction, a resource of a pod associated with the first microservice.

The first obtaining module 201, the building module 202, the first generation module 203, and the first adjustment module 204 may be all implemented by software, or may be implemented by hardware. For example, the following uses the first obtaining module 201 as an example to describe an implementation of the first obtaining module 201. Similarly, for implementations of the building module 202, the first generation module 203, and the first adjustment module 204, refer to the implementation of the first obtaining module 201.

When a module is used as an example of a software functional unit, the first obtaining module 201 may include code that runs on a compute instance. The compute instance may include at least one of a physical host (computing device), a virtual machine, and a container. Further, there may be one or more compute instances. For example, the first obtaining module 201 may include code that runs on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For communication between two VPCs in a same region and cross-region communication between VPCs in different regions, a communication gateway needs to be disposed in each VPC, and interconnection between the VPCs is implemented through communication gateways.

When a module is used as an example of a hardware functional unit, the first obtaining module 201 may include at least one computing device, for example, a server. Alternatively, the first obtaining module 201 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

A plurality of computing devices included in the first obtaining module 201 may be distributed in a same region or different regions. The plurality of computing devices included in the first obtaining module 201 may be distributed in a same AZ or different AZs. Similarly, the plurality of computing devices included in the first obtaining module 201 may be distributed in a same VPC or a plurality of VPCs. The plurality of computing devices may be any combination of computing devices such as the server, the ASIC, the PLD, the CPLD, the FPGA, and the GAL.

It should be noted that, in another embodiment, the first obtaining module 201 may be configured to perform any step in the resource scheduling method shown in FIG. 8, the building module 202 may be configured to perform any step in the resource scheduling method shown in FIG. 8, the first generation module 203 may be configured to perform any step in the resource scheduling method shown in FIG. 8, and the first adjustment module 204 may be configured to perform any step in the resource scheduling method shown in FIG. 8. Steps implemented by the first obtaining module 201, the building module 202, the first generation module 203, and the first adjustment module 204 may be specified based on a requirement. The first obtaining module 201, the building module 202, the first generation module 203, and the first adjustment module 204 separately implement different steps in the resource scheduling method shown in FIG. 8, to implement all functions of the first resource scheduling apparatus 20.

With reference to FIG. 11, another embodiment of this application provides a second resource scheduling apparatus 30. The second resource scheduling apparatus 30 includes a second obtaining module 301, a creation module 302, a second generation module 303, and a second adjustment module 304.

The second obtaining module 301 is configured to obtain resource information of each node in a cluster and resource information of a container in each node. A container engine may be installed on each node.

The creation module 302 is configured to: in response to a startup instruction of a first microservice deployed in the cluster, create a first pod for the first microservice. A first resource upper limit value may be set for the first pod.

The second generation module 303 is configured to generate, based on resource information of a first node on which the first microservice is deployed and resource information of a container in the first node, a resource adjustment instruction associated with the first pod.

The second adjustment module 304 is configured to adjust a resource occupation upper limit of the first pod from the first resource upper limit value to a second resource upper limit value based on the container engine and the resource adjustment instruction. The second resource upper limit value may be greater than the first resource upper limit value.

The second obtaining module 301, the creation module 302, the second generation module 303, and the second adjustment module 304 may be all implemented by software, or may be implemented by hardware. For example, the following uses the second obtaining module 301 as an example to describe an implementation of the second obtaining module 301. Similarly, for implementations of the creation module 302, the second generation module 303, and the second adjustment module 304, refer to the implementation of the second obtaining module 301.

When a module is used as an example of a software functional unit, the second obtaining module 301 may include code that runs on a compute instance. The compute instance may include at least one of a physical host (computing device), a virtual machine, and a container. Further, there may be one or more compute instances. For example, the second obtaining module 301 may include code that runs on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same VPC, or may be distributed in a plurality of VPCs. Usually, one VPC is disposed in one region. For communication between two VPCs in a same region and cross-region communication between VPCs in different regions, a communication gateway needs to be disposed in each VPC, and interconnection between the VPCs is implemented through communication gateways.

When a module is used as an example of a hardware functional unit, the second obtaining module 301 may include at least one computing device, for example, a server. Alternatively, the second obtaining module 301 may be a device implemented by using an ASIC, a PLD, or the like. The PLD may be implemented by a CPLD, an FPGA, a GAL, or any combination thereof.

A plurality of computing devices included in the second obtaining module 301 may be distributed in a same region or different regions. The plurality of computing devices included in the second obtaining module 301 may be distributed in a same AZ or different AZs. Similarly, the plurality of computing devices included in the second obtaining module 301 may be distributed in a same VPC or a plurality of VPCs. The plurality of computing devices may be any combination of computing devices such as the server, the ASIC, the PLD, the CPLD, the FPGA, and the GAL.

It should be noted that, in another embodiment, the second obtaining module 301 may be configured to perform any step in the resource scheduling method shown in FIG. 9, the creation module 302 may be configured to perform any step in the resource scheduling method shown in FIG. 9, the second generation module 303 may be configured to perform any step in the resource scheduling method shown in FIG. 9, and the second adjustment module 304 may be configured to perform any step in the resource scheduling method shown in FIG. 9. Steps implemented by the second obtaining module 301, the creation module 302, the second generation module 303, and the second adjustment module 304 may be specified based on a requirement. The second obtaining module 301, the creation module 302, the second generation module 303, and the second adjustment module 304 separately implement different steps in the resource scheduling method shown in FIG. 9, to implement all functions of the second resource scheduling apparatus 30.

An embodiment of this application further provides a computer storage medium. The computer storage medium stores computer instructions. When the computer instructions are run by a computing device cluster, the computing device cluster is enabled to perform the foregoing related method steps to implement the resource scheduling method in the foregoing embodiments.

An embodiment of this application further provides a computer program product. When the computer program product runs on a computing device cluster, the computing device cluster is enabled to perform the foregoing related steps to implement the resource scheduling method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. The apparatus has a function of implementing behavior of a computing device cluster in the resource scheduling method provided in the foregoing embodiments. The function may be implemented by hardware, or may be implemented by hardware by executing corresponding software. The hardware or software includes one or more modules corresponding to the foregoing function.

The computer storage medium, the computer program product, or the chip provided in embodiments of this application may be all configured to perform the corresponding method provided above. Therefore, for beneficial effect that can be achieved, refer to the beneficial effect of the corresponding method provided above. Details are not described herein again.

The foregoing descriptions of the implementations allow a person skilled in the art to clearly understand that, for the purpose of convenient and brief description, division into the functional modules is merely used as an example for description. During actual application, the foregoing functions may be allocated to different functional modules for implementation as required. In other words, an inner structure of the apparatus is divided into different functional modules to implement all or some of the functions described above.

In several embodiments provided in this application, it should be understood that the disclosed apparatuses and methods may be implemented in other manners. For example, the described apparatus embodiments are examples. For example, division into the modules or units is logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate components may or may not be physically separate, and components displayed as units may be one or more physical units, that is, may be located in one place, or may be distributed to a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application.

## Claims

1. A resource scheduling method, wherein the method comprises:
obtaining resource information of each node in a cluster and resource information of a container in each node, wherein a container engine is installed on each node;
building, based on the resource information of each node and the resource information of the container in each node, a resource profile of a microservice deployed on each node, wherein the microservice deployed on each node runs based on one or more containers;
if determining that resource adjustment needs to be performed on a first microservice deployed in the cluster, generating, based on a resource profile of the first microservice, resource information of a first node on which the first microservice is deployed, and resource information of a container in the first node, a resource adjustment instruction associated with the first microservice; and
adjusting, based on the container engine and the resource adjustment instruction, a resource of a container set pod associated with the first microservice.

2. The resource scheduling method according to claim 1, wherein the building, based on the resource information of each node and the resource information of the container in each node, a resource profile of a microservice deployed on each node comprises:
obtaining, based on the resource information of the container in each node, resource information of the microservice deployed on each node; and
building, based on the resource information of each node and the resource information of the microservice deployed on each node, the resource profile of the microservice deployed on each node, wherein the resource profile comprises a resource occupation dimension and a time dimension.

3. The resource scheduling method according to claim 1 or 2, wherein the method further comprises:
if a difference between a resource occupied by the first microservice and a resource upper limit value of the first microservice is less than a first preset threshold, determining that resource adjustment needs to be performed on the first microservice; or
if a difference between a resource occupied by the first microservice and a resource upper limit value of the first microservice is greater than a second preset threshold, determining that resource adjustment needs to be performed on the first microservice.

4. The resource scheduling method according to claim 3, wherein the resource occupied by the first microservice comprises one or more of the following: a processor resource, a memory resource, a disk resource, or a network bandwidth resource, and the determining that resource adjustment needs to be performed on the first microservice comprises:
if a difference between a corresponding resource upper limit value and any one of the processor resource, the memory resource, the disk resource, and the network bandwidth resource occupied by the first microservice is less than a corresponding first preset threshold, determining that resource adjustment needs to be performed on the first microservice; or
if a difference between a corresponding resource upper limit value and any one of the processor resource, the memory resource, the disk resource, and the network bandwidth resource occupied by the first microservice is greater than a corresponding second preset threshold, determining that resource adjustment needs to be performed on the first microservice.

5. The resource scheduling method according to claim 4, wherein the determining that resource adjustment needs to be performed on the first microservice comprises:
if the difference between the corresponding resource upper limit value and any one of the processor resource, the memory resource, the disk resource, and the network bandwidth resource occupied by the first microservice is less than the corresponding first preset threshold, determining that scale-out adjustment needs to be performed on the first microservice; or
if the difference between the corresponding resource upper limit value and any one of the processor resource, the memory resource, the disk resource, and the network bandwidth resource occupied by the first microservice is greater than the corresponding second preset threshold, determining that scale-in adjustment needs to be performed on the first microservice.

6. The resource scheduling method according to any one of claims 1 to 5, wherein the generating, based on a resource profile of the first microservice, resource information of a node on which the first microservice is deployed, and resource information of a container in the node, a resource adjustment instruction associated with the first microservice comprises:
predicting, based on the resource profile of the first microservice, a quantity of resources required by the first microservice; and
generating, based on the predicted quantity of resources, the resource information of the node on which the first microservice is deployed, and the resource information of the container in the node, the resource adjustment instruction associated with the first microservice.

7. The resource scheduling method according to claim 6, wherein the generating the resource adjustment instruction associated with the first microservice comprises:
generating a resource adjustment instruction for all pods associated with the first microservice; or
generating a resource adjustment instruction for a specified pod associated with the first microservice.

8. The resource scheduling method according to any one of claims 1 to 7, wherein the adjusting, based on the container engine and the resource adjustment instruction, a resource of a pod associated with the first microservice comprises:
determining a pod associated with the resource adjustment instruction, and invoking, using the container engine, a resource adjustment application programming interface API to perform resource adjustment on the pod associated with the resource adjustment instruction.

9. The resource scheduling method according to any one of claims 1 to 8, wherein a priority is configured for the microservice deployed on each node, and the method further comprises:
if a remaining resource of the first node cannot meet a resource adjustment requirement of the first microservice, releasing a part of resources occupied by a second microservice deployed on the first node, wherein a priority of the second microservice is lower than a priority of the first microservice.

10. The resource scheduling method according to claim 9, wherein the releasing a part of resources occupied by a second microservice deployed on the first node comprises:
releasing, based on a resource profile of the second microservice, the part of resources occupied by the second microservice.

11. The resource scheduling method according to any one of claims 1 to 8, wherein a priority is configured for the microservice deployed on each node, and the method further comprises:
if a remaining resource of the first node cannot meet a resource adjustment requirement of the first microservice, scheduling a second microservice deployed on the first node to another node in the cluster, wherein a priority of the second microservice is lower than a priority of the first microservice.

12. The resource scheduling method according to claim 11, wherein the scheduling a second microservice deployed on the first node to another node in the cluster comprises:
selecting, based on resource profiles of microservices deployed on the first node, the second microservice that can be scheduled to the another node in the cluster.

13. A resource scheduling method, wherein the method comprises:
obtaining resource information of each node in a cluster and resource information of a container in each node, wherein a container engine is installed on each node;
in response to a startup instruction of a first microservice deployed in the cluster, creating a first container set pod for the first microservice, wherein a first resource upper limit value is set for the first pod;
generating, based on resource information of a first node on which the first microservice is deployed and resource information of a container in the first node, a resource adjustment instruction associated with the first pod; and
adjusting a resource occupation upper limit of the first pod from the first resource upper limit value to a second resource upper limit value based on the container engine and the resource adjustment instruction, wherein the second resource upper limit value is greater than the first resource upper limit value.

14. The resource scheduling method according to claim 13, wherein the method further comprises:
if determining that the first microservice is successfully started, adjusting the resource occupation upper limit of the first pod from the second resource upper limit value to the first resource upper limit value.

15. A resource scheduling apparatus, wherein the apparatus comprises:
a first obtaining module, configured to obtain resource information of each node in a cluster and resource information of a container in each node, wherein a container engine is installed on each node;
a building module, configured to build, based on the resource information of each node and the resource information of the container in each node, a resource profile of a microservice deployed on each node, wherein the microservice deployed on each node runs based on one or more containers;
a first generation module, configured to: when resource adjustment needs to be performed on a first microservice deployed in the cluster, generate, based on a resource profile of the first microservice, resource information of a first node on which the first microservice is deployed, and resource information of a container in the first node, a resource adjustment instruction associated with the first microservice; and
a first adjustment module, configured to adjust, based on the container engine and the resource adjustment instruction, a resource of a container set pod associated with the first microservice.

16. A resource scheduling apparatus, wherein the apparatus comprises:
a second obtaining module, configured to obtain resource information of each node in a cluster and resource information of a container in each node, wherein a container engine is installed on each node;
a creation module, configured to: in response to a startup instruction of a first microservice deployed in the cluster, create a first container set pod for the first microservice, wherein a first resource upper limit value is set for the first pod;
a second generation module, configured to generate, based on resource information of a first node on which the first microservice is deployed and resource information of a container in the first node, a resource adjustment instruction associated with the first pod; and
a second adjustment module, configured to adjust a resource occupation upper limit of the first pod from the first resource upper limit value to a second resource upper limit value based on the container engine and the resource adjustment instruction, wherein the second resource upper limit value is greater than the first resource upper limit value.

17. A computing device cluster, comprising at least one computing device, wherein each computing device comprises a processor and a memory; and
a processor of the at least one computing device is configured to execute instructions stored in a memory of the at least one computing device, to enable the computing device cluster to perform the resource scheduling method according to any one of claims 1 to 12, or perform the resource scheduling method according to claim 13 or 14.

18. A computer program product comprising instructions, wherein when the instructions are run by a computing device cluster, the computing device cluster is enabled to perform the resource scheduling method according to any one of claims 1 to 12, or perform the resource scheduling method according to claim 13 or 14.

19. A computer-readable storage medium, comprising computer program instructions, wherein when the computer program instructions are executed by a computing device cluster, the computing device cluster performs the resource scheduling method according to any one of claims 1 to 12, or performs the resource scheduling method according to claim 13 or 14.
